Europäisches Patentamt

European Patent Office

Office européen des brevets

(11) Numéro de publication : **0 369 849 B1**

(12) **FASCICULE DE BREVET EUROPEEN**

(45) Date de publication du fascicule du brevet :
**29.04.92 Bulletin 92/18**

(51) Int. Cl.⁵ : **B23Q 3/06, B24B 41/06**

(21) Numéro de dépôt : **89402952.9**

(22) Date de dépôt : **25.10.89**

(54) **Procédés et dispositif de positionnement précis d'un segment de galet en vue de la finition de sa portée de tourillonnement, et procédé pour usiner les bers d'un tel dispositif.**

(30) Priorité : **18.11.88 FR 8815007**

(43) Date de publication de la demande :
**23.05.90 Bulletin 90/21**

(45) Mention de la délivrance du brevet :
**29.04.92 Bulletin 92/18**

(84) Etats contractants désignés :
**DE ES GB IT**

(56) Documents cités :
**FR-A- 2 342 130**
**US-A- 1 436 626**

(56) Documents cités :
**THE TOOL AND MANUFACTURING ENGI-NEER, vol. 53, no. 4, octobre 1964, page 58, Society of Manufacturing Engineers, Milwaukee, US; "Fixture aligns castings for machining - disregards shifted cores"**

(73) Titulaire : **GLAENZER SPICER**
**10 Rue J.P. Timbaud**
**F-78301 Poissy (FR)**

(72) Inventeur : **Orain, Michel**
**10 Rue des Côtes de Vannes**
**F-78700 Conflans Ste-Honorine (FR)**

(74) Mandataire : **Kohn, Philippe et al**
**c/o CABINET LAVOIX 2, place d'Estienne d'Orves**
**F-75441 Paris Cédex 09 (FR)**

## Description

La présente invention concerne des procédés pour maintenir en position, en vue de l'usinage d'une portée de tourillonnement concave, un segment de galet comprenant une surface extérieure de roulement à profil transversal arrondi, ce segment de galet étant destiné notamment à faire partie d'un joint de transmission pour automobile.

La présente invention concerne également un dispositif pour maintenir en position un tel segment de galet en vue de l'usinage précité.

L'invention vise en particulier mais non limitativement des segments de galet destinés à faire partie d'un joint de transmission comprenant trois tourillons sphériques formant tripode à l'extrémité de l'un des deux arbres reliés par le joint. Selon le sens du mouvement à transmettre, chaque tourillon sphérique s'appuie par l'intermédiaire d'un segment de galet sur l'un ou l'autre de deux chemins de roulement longitudinaux respectifs ménagés à l'intérieur d'un bol fixé à l'autre des deux arbres reliés par le joint. Six segments de galet sont donc interposés chacun entre l'un des chemins de roulement et le tourillon respectif. Chaque segment de galet a une portée sphérique concave tourillonnant sur le tourillon sphérique, et une surface extérieure de roulement torique qui est capable de rouler sur le chemin de roulement et de s'incliner latéralement relativement au chemin de roulement qui a un profil cylindrique concave. Ces joints homocinétiques coulissants présentent les qualités de confort et de compacité requises pour l'équipement des automobiles modernes. Ils sont décrits dans la demande de brevet FR-A- 2 607 883.

Les performances remarquables de ces joints découlent pour une grande part de la lubrification hydrodynamique de l'articulation sphérique entre le tourillon sphérique et la portée sphérique concave du segment. Cette lubrification hydrodynamique annule pratiquement la trainée de glissement résultante tout en acceptant des pressions élevées pour le transfert de charge. La constitution du film extrêmement mince de lubrifiant - compte tenu des faibles vitesses de glissement - implique une parfaite complémentarité des surfaces.

On connaît des procédés d'usinage de la portée de tourillonnement concave qui ne permettent de réaliser qu'une complémentarité approximative. Ces procédés impliquent donc des étapes complémentaires de rodage des deux surfaces l'une sur l'autre selon un procédé utilisé dans la fabrication des lentilles optiques.La nécessité d'un tel rodage est incompatible avec les impératifs de prix de revient et de cadence de l'industrie automobile.

Pour que l'usinage la portée de tourillonnement ait la précision souhaitée, il est nécessaire de maintenir en position précise le segment en cours d'usinage.

En effet, les impératifs techniques suivants doivent être satisfaits :
- a) Réalisation précise de la cote d'épaisseur radiale du segment, permettant en fabrication de grande série, l'assemblage avec un jeu minimum des joints sans risque de coïncement ;
- b) Positionnement précis de l'axe et/ou du centre de la portée de tourillonnement, qui peut être légèrement excentré relativement au centre de la surface extérieure de roulement si l'on souhaite créer un effet de rappel du segment vers une position neutre dans laquelle la section d'appui contre le chemin de roulement est située à mi-longueur circonférentielle du segment. Cet effet est obtenu si l'épaisseur radiale du segment croît légèrement depuis la section précitée vers chaque extrémité du segment.
- c) Le cas échéant, correction de la portée concave par application au segment d'efforts appropriés lors de l'usinage de façon que le contact effectif entre tourillon et portée concave sous charge soit aussi étendu que possible malgré la déformation du segment sous l'effet de la charge. La demande de brevet FR-A- 2 621 660, publiée le 14 Avril 1989, enseigne que l'on peut simuler l'allure du segment sous charge réelle en appliquant aux deux extrémités du segment des efforts de compression tangentiels que l'on équilibre par un effort dirigé radialement vers l'intérieur appliqué à mi-longueur circonférentielle de la portée extérieure de roulement du segment. Par conséquent, si l'on usine la portée de tourillonnement alors que le segment est ainsi artificiellement chargé, la portée du segment sera exactement complémentaire du tourillon lorsque le segment subira sa charge nominale réelle.

La présente invention a ainsi pour but de proposer un procédé et un dispositif pour maintenir un segment de galet en position précise appropriée pour l'usinage de sa portée de tourillonnement concave, bien que la forme du segment de galet soit complexe et relativement peu propice à une telle précision.

Suivant l'invention, le procédé pour maintenir en position, en vue de l'usinage d'une portée de tourillonnement concave, un segment de galet, notamment pour joint de transmission pour automobile, comprenant une surface extérieure de roulement à profil transversal arrondi, est caracérisé en ce que :
- on place la surface extérieure de roulement contre deux bers de positionnement solidaires l'un de l'autre et espacés circonférentiellement l'un de l'autre ;
- on immobilise le segment à l'égard des rotations autour d'un axe passant sensiblement par les deux bers de positionnement ; et
- on applique à chaque extrémité du segment un effort de compression ayant une orientation sensiblement tangentielle relativement à l'axe de la surface extérieure de roulement.

Ainsi, l'axe et le centre de la surface extérieure de roulement se trouvent en position précise par rapport aux bers de positionnement.

Il est donc possible d'usiner sur le segment de galet une portée de tourillonnement telle qu'une portée sphérique concave dont le centre se trouve sur l'axe de la surface extérieure de roulement et éventuellement coïncide avec le centre de la surface extérieure de roulement. Il suffit pour cela que l'outil d'usinage prenne une position définie par rapport aux bers de positionnement.

Si au contraire, on désire que le centre de la portée sphérique présente une excentration selon une direction radiale prédéterminée par rapport à l'axe de la surface extérieure de roulement, on assure en outre un positionnement angulaire du segment autour de l'axe de sa surface extérieure de roulement par rapport aux bers de positionnement. De préférence, on assure ce positionnement angulaire en agissant sur l'une au moins des extrémités du segment, que l'on appuie contre une surface positionnée ou guidée de manière précise relativement aux bers de positionnement.

Selon un deuxième aspect de l'invention, le procédé pour maintenir en position, en vue de l'usinage d'une portée de tourillonnement concave, un segment de galet, notamment pour joint de transmission pour l'automobile, comprenant une surface extérieure de roulement à profil transversal arrondi, est caractérisé en ce que :

– on place la surface extérieure de roulement contre deux bers de positionnement solidaires l'un de l'autre et espacés circonférentiellement l'un de l'autre ;

– on applique à chaque extrémité du segment un effort de compression ayant une orientation sensiblement tangentielle relativement à l'axe de la surface extérieure de roulement ; et

– on applique sensiblement à mi-longueur circonférentielle du segment un effort dirigé radialement vers l'intérieur de la surface extérieure du roulement.

On simule ainsi pendant l'usinage la charge réelle à laquelle le segment de galet sera soumis en service, ce qui donne à la portée de tourillonnement une géomètrie qui sera parfaite lors du fonctionnement du joint sous charge.

Selon un troisième aspect de l'invention, le dispositif pour maintenir en position, en vue de l'usinage d'une portée de tourillonnement concave, un segment de galet, notamment pour joint de transmission pour l'automobile, comprenant une surface extérieure de roulement à profil transversal arrondi, est caractérisé en ce qu'il comprend :

– deux bers de positionnement solidaires l'un de l'autre, destinés à donner appui à la surface extérieure de roulement, et espacés circonférentiellement l'un de l'autre ;

– des moyens pour immobiliser le segment à l'égard des rotations autour d'un axe passant sensiblement par les deux bers de positionnement ;

– deux griffes dont l'une au moins est mobile par rapport aux bers de positionnement, pour appliquer aux deux extrémités du segment un effort de compression ayant une orientation sensiblement tangentielle relativement à l'axe de la surface extérieure de roulement.

De préférence, les moyens pour immobiliser le segment à l'égard des rotations autour d'un axe passant sensiblement par les deux bers de positionnement comprennent un troisième ber mobile par rapport aux bers de positionnement, ainsi que des moyens pour solliciter le troisième ber en appui contre la surface extérieure de roulement.

Selon un quatrième aspect de l'invention, le procédé pour usiner les deux bers de positionnement et le troisième ber, sollicité vers la surface extérieure de roulement du segment de galet, est caractérisé en ce qu'on cale, à l'encontre de la sollicitation, le troisième ber par rapport aux deux bers de positionnement et on usine ensemble les trois bers par une même rotation autour d'un axe dont la position, par rapport aux trois bers, correspond sensiblement à celle qui sera ultérieurement souhaitée pour l'axe de la surface extérieure de roulement des segments à usiner.

Lors de l'utilisation du dispositif, on supprime le calage du troisième ber, de façon que celui-ci s'appuie librement sur les segments à usiner. Compte tenu de l'usinage commun des trois bers autour d'un axe approprié, les trois bers positionnent exactement la circonférence du segment dans le plan voulu pour l'usinage de la portée de tourillonnement des segments.

D'autres particularités et avantages de l'invention ressortiront encore de la description ci-après.

Aux dessins annexés donnés à titre d'exemples non limitatifs :

– la figure 1 est une vue en coupe transversale d'une ébauche de segment de galet en cours de formage dans une presse, en fin de course du poinçon de la presse ;

– la figure 2 est une vue en coupe selon le plan II-II de la figure 1 ;

– la figure 3 représente l'ébauche terminée reposant dans la matrice vue de dessus ;

– les figures 4 et 4a représentent schématiquement de dessous le principe de maintien et de positionnement précis du segment de galet par la monture et un premier mode de rectification de la portée sphérique concave, dans deux positions de la monture ;

– la figure 5 est une vue du segment depuis la droite de la figure 4 ;

– la figure 6 est une vue en bout du segment avec coupe d'un ber fixe selon le plan VI-VI de la figure 4 ;

– la figure 7 est une vue en coupe selon le plan VII-VII de la figure 4 ;

– la figure 8 est une vue analogue à la figure 4 mais représentant un exemple pratique de mise en oeuvre du principe de maintien illustré par la figure 4 ;

– la figure 9 est une vue en coupe selon le plan IX-IX de la figure 8 ;

– la figure 10 est une vue en coupe selon le plan X-X de la figure 8 ;

– la figure 11 est une vue analogue à la figure 4 mais concernant un deuxième exemple de mise en oeuvre du premier mode de rectification ;

– la figure 12 est une vue en coupe selon le plan XII-XII de la figure 11 ;

– la figure 13 est une vue analogue à la figure 11 mais montrant les bers fixes et mobile en cours d'usinage ;

– la figure 14 représente, en coupe, un exemple de mise en oeuvre d'un deuxième mode de rectification selon l'invention ;

– la figure 15 est une vue partielle en coupe selon le plan XV-XV de la figure 14 ;

– la figure 16 est une vue de la monture depuis la droite de la figure 14, le segment étant en place dans la demi-vue inférieure, et absent dans la demi-vue supérieure ;

– la figure 17 est une vue de la monture utilisable dans le cadre d'un troisième mode de rectification de la portée sphérique concave, en coupe selon le plan circonférentiel du segment ;

– la figure 18 est une vue en élévation de la monture de la figure 17, avec demi-coupe selon le plan XVIII-XVIII de la figure 17 ;

– la figure 19 est une vue d'une variante simplifiée du troisième mode de rectification, en coupe selon le plan circonférentiel du segment ; et

– la figure 20 est une vue en coupe selon le plan XX-XX de la figure 19.

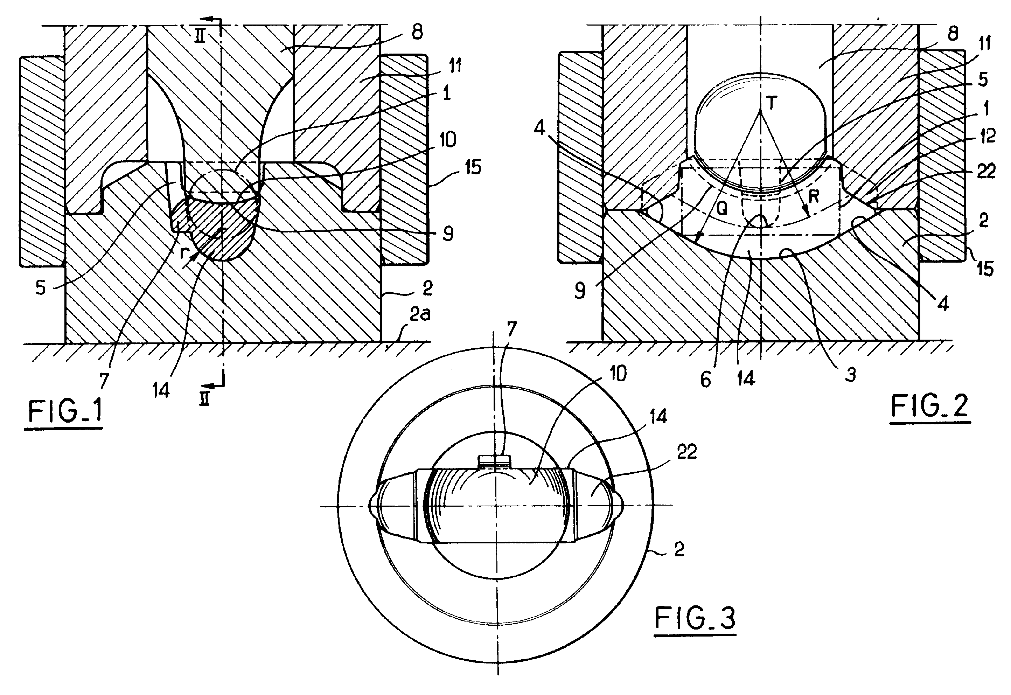

Comme représenté aux figures 1 et 2, l'ébauche 14 du segment de galet est conformée à froid à partir d'une billette cylindrique d'acier recuit 1 représentée en trait mixte. Cette billette est introduite dans une matrice 2 fixée à la table 2a d'une presse. Cette matrice porte une surface active interne comprenant un segment de tore central 3 (figure 2) raccordé à ses extrémités à deux surfaces cylindriques 4 complémentaires des chemins de roulement et glissement que comportera la surface intérieure du bol du joint homocinétique pour lequel le segment 14 est prévu.

Le segment 14 va donc présenter une surface extérieure comprenant une région torique centrale prolongée à chaque extrémité par une région cylindrique.

Conformément à la demande de brevet FR-A- 2 622 653, publiée le 5 Mai 1989, les deux surfaces cylindriques extérieures du segment de galet permettent au segment de glisser sous pression relativement faible sur le chemin de roulement et glissement associé lorsque le tourillon du tripode associé à ce segment se trouve au voisinage de l'une ou l'autre de ses positions axiales extrêmes par rapport au bol du joint.Ceci permet au joint d'avoir une grande course de coulissement sans que le segment de galet doive avoir une course circonférentielle correspondante autour de son tourillon de tripode. Au contraire, lorsque le tourillon de tripode se trouve sensiblement à mi-course axiale à l'intérieur du bol, le segment de galet fonctionne par roulement de sa surface torique dans le chemin de glissement et roulement, ce qui se traduit par le minimum de frottement pour cette situation qui correspond à une très grosse proportion du temps de fonctionnement du joint.

La matrice comporte une entaille latérale 5 dont le fond 6 cylindrique est complémentaire d'un bouton de retenue 7 à former latéralement sur le segment 14. Conformément à la demande de brevet français 87 14 917, ce bouton coopère en service avec des butées qui, lorsque le tripode approche de l'une de ses positions axiales extrêmes dans le bol, obligent en cas de besoin le segment à pivoter autour de son tourillon jusqu'à ce que la région cylindrique correspondante de la surface extérieure du segment soit en contact avec le chemin de roulement. Il est ainsi automatiquement remédié à tout décalage angulaire du segment par glissement ou roulement - glissement accidentel de la région torique de la surface extérieure du segment.

Le poinçon 8 mu par le piston de presse, non représenté, porte une extrémité de travail sphérique 9 sensiblement complémentaire de la portée sphérique concave 10 à réaliser sur le segment. Le poinçon 8 est guidé à l'intérieur d'un fourreau 11 portant deux angles 12 (figure 2) de formage des extrémités 22 du segment 14.

Le fourreau, et par conséquent le poinçon, sont centrés relativement à la matrice 2 par une frette 15 enserrant le fourreau 11 et coulissant autour de la matrice 2.

La surface torique extérieure dont la section circulaire transversale a un rayon r (figure 1) et dont la ligne des centres a un rayon R (figure 2), et les extrémités cylindriques de rayon transversal r ainsi formés, présentent une géométrie et un état de surface très satisfaisants qui dispensent de toute finition. Par contre, la surface sphérique concave doit être reprise en rectification après le traitement thermochimique de durcissement du segment.

La surface torique extérieure sert, selon l'invention, de référence de positionnement pendant cette opération de rectification.

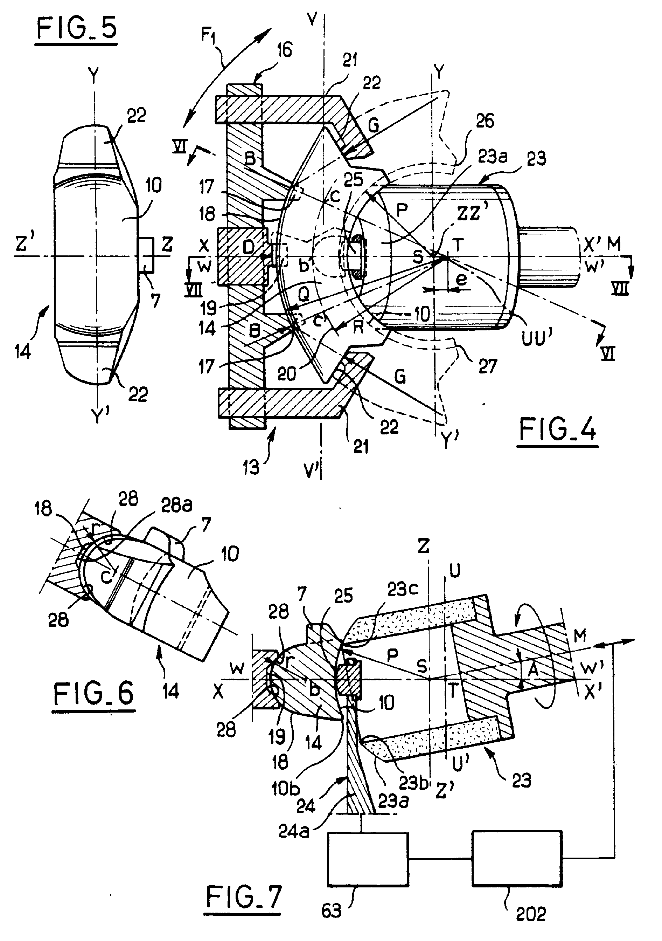

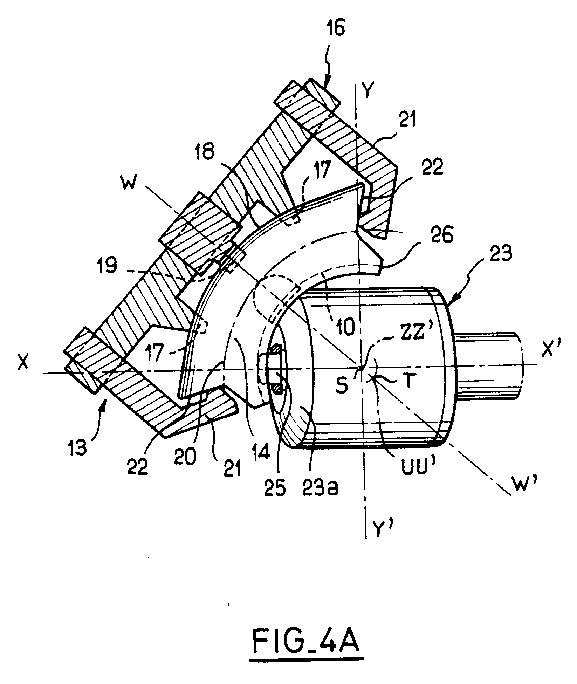

Les figures 4, 4a et 5 à 7 représentent schématiquement le principe du maintien du segment en position précise relativement au corps 16 - ou plateau porte-pièce - d'une monture 13 destinée à être elle-même guidée avec précision lors de l'opération de rectification de la portée sphérique concave 10.

Le plateau 16 comporte deux portées fixes ou bers 17, qui sont donc fixes l'un par rapport à l'autre, et qui ont un profil circulaire de rayon r, complémentaire de la section transversale du tore de roulement 18 du segment 14 (figure 6). Les bers 17 sont espacés circonférentiellement l'un de l'autre autour de l'axe UU' de la surface torique 18.

L'appui du segment 14 contre les bers 17, est intrinsèquement instable à l'égard des rotations autour d'un axe géométrique VV' passant sensiblement par les centres C des profils des deux bers de positionnement 17. C'est pourquoi la monture comprend un troisième ber 19 qui est situé à mi-distance circonférentielle entre les deux bers de positionnement 17, qui est mobile selon l'axe médian WW' voulu pour le segment 14, et qui s'appuie en service au milieu de la longueur circonférentielle de la surface extérieure du segment.

On appelle plan circonférentiel du segment le plan coupant perpendiculairement l'axe UU' de la surface extérieure torique 18 au centre T de cette dernière.

On appelle "axe médian WW' du segment" l'axe qui est porté par le plan circonférentiel du segment, coupe l'axe UU' et traverse le segment à mi-longueur circonférentielle de celui-ci. Dans la position représentée à la figure 4, l'axe médian coïncide avec un axe fixe XX' lié au bâti (non représenté) de la rectifieuse.

Lorsque le segment 14 est appuyé contre les deux bers 17 et contre le troisième ber 19, l'axe UU' de la surface torique 18 et son centre T sont positionnés avec précision par rapport au plateau 16.

On souhaite que la portée sphérique 10 à réaliser sur le segment 14 ait un centre S qui soit situé sur l'axe médian, coïncidant avec l'axe XX' sur les figures, et entre le segment et le centre T de la surface torique 18.

En vue de cet usinage, le plateau 16 est supporté par le bâti de rectifieuse (non représenté) avec possibilité de rotation autour d'un axe ZZ' coupant perpendiculairement au centre S voulu pour la portée sphérique 10 le plan circonférentiel du segment tel que défini par les bers 17, 19. L'excentration e a été fortement exagérée à la figure 4, dans un but de clarté. Elle est en pratique de l'ordre de 1 à plusieurs dixièmes de millimètre. Cette excentration conditionne la caractéristique de rappel en position neutre du segment pendant l'utilisation du joint. En effet, avec ladite excentration, la région médiane du segment est radialement plus mince que le reste du segment et, sous charge, le segment tend à se positionner autour du tourillon de façon que sa région la plus mince soit interposée entre le tourillon et le chemin de roulement. Il importe que l'excentration e entre les centres S et T ait l'orientation voulue.

Pour cela, le plan de symétrie transversal du segment, passant par l'axe UU' de la surface torique 18, et par l'axe médian WW' du segment, doit contenir le centre shérique S voulu pour la portée sphérique 10 afin que le très court segment ST représentant l'excentration "e" soit orienté parallèlement au plan de symétrie transverssal du segment. Si le centre S était écarté, ne serait-ce que de quelques dixièmes de mm, du plan de symétrie transversal du segment, le segment ST formerait un angle très important, par exemple 15°, avec le plan de symétrie transversale du segment, car la longueur "e" du segment ST, fortement exagérée aux figures dans un but de clarté, est elle-même de l'ordre de 1 à plusieurs dixièmes de mm. Un segment de galet qui comporterait une telle erreur sur l'orientation de ST serait constamment, en service, rappelé dans une position très mauvaise autour de son tourillon.

La condition de passage du plan (UU', WW') de symétrie transversale du segment 14 par le centre voulu S situé sur l'axe ZZ' est assurée principalement par les bers de positionnement 17. Si un ber 17 était décalé de un dixième de mm par rapport à l'axe ZZ', il s'ensuivrait un gros défaut d'orientation de ST pendant la rectification des segments. On note à ce sujet que l'invention, en positionnant le segment 14 par appui de sa surface torique 18 contre les bers 17, élimine les risques d'erreur ayant pour origines une position imprécise du centre T. Le risque d'imprécision sur la position du centre T est probable, compte tenu du procédé d'obtention de la surface 18, par formage à froid.

La condition de passage du plan (UU', WW') par le centre S est également assurée par deux griffes mobiles 21 commandées automatiquement, qui calent circonférentiellement le segment 14 autour de l'axe UU' de la surface torique 18. Toutefois, ce calage peut être moins précis que le positionnement assuré par les bers 17 puisqu'une erreur sur la position d'une griffe 21 se traduirait par une erreur d'un ordre de grandeur beaucoup plus faible sur la position relative des centres S et T.

Les deux griffes mobiles 21 viennent prendre appui sur les extrémités 22 du segment en y exerçant deux forces G, chacune dirigée, selon une orientation sensiblement tangentielle, vers le centre du ber fixe 17 le plus proche, et assurent ainsi le maintien du segment bloqué contre les trois bers.

Chacun des trois bers 17 et 19 comporte deux surfaces d'appui 28 séparées par un dégagement 28a s'étendant parallèlement à l'axe UU' de la surface torique 18 afin d'assurer un positionnement précis des sections de rayon r.

La résultante des forces G d'appui des griffes 21 sur les extrémités du segment, laquelle est parallèle à l'axe médian du segment, doit être supérieure à la force d'appui D du ber mobile 19 afin que les forces B des bers fixes 17 conservent une capacité de guidage efficace. Cependant, les forces G et D peuvent être grandes devant les forces B, pour usiner la portée sphérique 10 alors que le segment est déformé sensiblement comme il le sera en service sous charge nominale, comme il a été dit plus haut.

L'excentration e a été fortement exagérée à la figure 4, dans un but de clarté. Elle est en pratique de l'ordre de 1 à plusieurs dixièmes de millimètre. Cette excentration conditionne la caractéristique de rappel en position neutre du segment pendant l'utilisation du joint. En effet, avec ladite excentration, la région médiane du segment est radialement plus mince que le reste du segment et, sous charge, le segment tend à se positionner autour du tourillon de façon que sa région la plus mince soit interposée entre le tourillon et le chemin de roulement.

La rectification est effectuée au moyen d'une meule boisseau 23 dont l'axe de rotation MS passe rigoureusement par le centre voulu S pour la portée sphérique, et coupe par conséquent en S l'axe ZZ′ de pivotement de la monture 13. La meule 23 présente à son extrémité une surface active annulaire 23a qui est une zone sphérique de rayon P égal au rayon voulu pour la portée sphérique 10, et centrée sur l'axe MS de la meule.

L'avance de la meule pour le travail de rectification de la portée sphérique concave 10, pour la compensation de l'usure de la meule ainsi que pour le mouvement de retrait pour permettre la mise en place des segments à usiner et l'enlèvement des segments usinés, s'effectue selon l'axe MS.

Pendant l'usinage, on fait avancer la meule le long de son axe en même temps qu'on la fait tourner autour de son axe. A tout moment, il n'y a qu'une partie de la portée sphérique 10 qui est en contact avec la surface active 23a de la meule. L'usinage de l'ensemble de la portée 10 résulte d'un mouvement relatif de balayage rotatif entre la meule d'une part et le segment 14 et sa monture 13 d'autre part. Ce mouvement de balayage rotatif est assuré par pivotement en va-et-vient de la monture et du segment qu'elle porte autour de l'axe ZZ′, comme le schématise la flèche F1 à la figure 4. Ce mouvement est permis par le montage pivotant qui est prévu selon l'axe ZZ′ entre le plateau 16 et le bâti non représenté de la rectifieuse. On a représenté à la figure 4 le segment 14 à mi-course de balayage (axes XX′ et WW′ confondus) et, en pointillés, dans ses deux positions extrêmes 26 et 27. La figure 4a montre la situation lorsque le segment est dans la position 26 de la figure 4. L'axe médian WW′ du segment est alors écarté de l'axe XX′.

Le dispositif de rectification comporte en outre un palpeur 24 comprenant une touche 25 en matériau très dur tel que le carbure de tungstène. La touche 25 est en contact avec la portée 10 en cours d'usinage, dans une région de celle-ci qui est en regard de l'alésage 23d de la meule 23 et qui par conséquent n'est pas en contact avec la surface active 23a de la meule 23. Le palpeur 24 est supporté par le bâti de la machine, et sa touche 25 s'appuie sur la portée 10 selon l'axe XX′ de façon à être toujours en contact avec la portée 10 quelle que soit la position du segment 14 dans son mouvement de va-et-vient autour de l'axe ZZ′.

Le palpeur 24 comporte un bras 24a qui s'étend entre une région 10b de l'un des bords latéraux de la portée 10, et une région 23b du bord annulaire intérieur de la surface active 23a. Les régions 10b et 23b sont écartées l'une de l'autre. Grâce à un angle A (figure 7) entre l'axe XX′ et l'axe MS de la meule, le passage du bras est facilité tandis qu'une région 23c, diamètralement opposée à la région 23b, du bord annulaire intérieur de la surface 23a est en contact avec la portée 10.

L'angle A entre l'axe de rotation MS de la meule et l'axe XX′ peut varier depuis zéro jusqu'à une trentaine de degrés. Il est conditionné non seulement par la présence du bras 24a mais également par la nécessité que la surface active 23a de la meule balaye de manière aussi égale que possible la portée 10 à rectifier.

Le palpeur 24 est relié à un comparateur micrométrique 63, qui n'est représenté que de manière schématique, qui commande grâce à un dispositif d'asservissement 202, qui n'est lui aussi que schématisé, les mouvements de la meule le long de son axe, à savoir :
- mouvement d'approche de la meule ;
- mouvement d'avance de travail ; et
- arrêt du mouvement d'avance de travail et mouvement de retrait de la meule et du palpeur 24 lorsque la cote précise désirée est atteinte.

Plus précisément, le palpeur 24 détecte en permanence la position du point d'intersection entre l'axe XX′ et la portée sphérique 10 en cours d'usinage, et déclenche l'arrêt de l'avance de travail lorsque ce point est à une distance P, égale au rayon souhaité pour la portée sphérique 10, du centre S voulu pour la portée sphérique 10. Cette situation est atteinte lorsque le centre de la surface active 23a de la meule se trouve lui-même au point S, comme représenté à la figure 7.

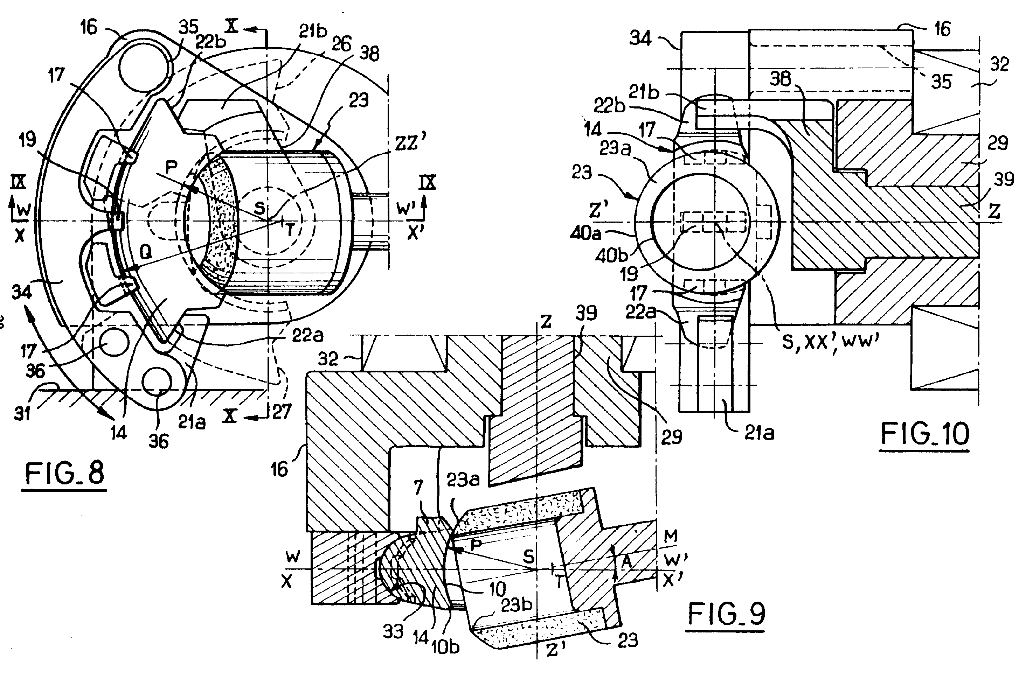

Dans la description du premier exemple pratique, représenté aux figures 8 à 10, de réalisation d'un dispositif en vue de la mise en oeuvre du procédé décrit en référence aux figures 4 à 7, on désignera par les mêmes références qu'aux figures 4 à 7 les éléments fonctionnellement identiques ou similaires, et on ne décrira que les différences par rapport aux figures 4 à 7.

Le plateau oscillant 16, qui porte les bers fixes 17, est articulé à un bâti 31 de la rectifieuse au moyen d'un arbre creux 29 supporté par un palier 32 d'axe ZZ′ pour permettre le mouvement de balayage rotatif autour dudit axe. Le ber mobile 19 est usiné dans un levier 34 dont l'une des extrémités est articulée au plateau 16 autour d'un axe 35 qui est parallèle à l'axe ZZ', et voisin de l'une des extrémités 22b du segment 14 en service.

L'autre extrémité du levier porte rigidemment, au moyen de deux vis 36, une première griffe démontable 21a de blocage du segment contre les bers. Cette griffe 21a est dite fixe car compte tenu de la position de l'axe 35, elle donne à l'extrémité circonférentielle correspondante 22a du segment 14 un appui circonférentiel rigide. La deuxième griffe 21b, portée par un levier 38, est commandée par un arbre 39 d'axe ZZ', solidaire du levier 38, et monté pivotant dans l'arbre creux 29. L'arbre 39 est relié à des moyens pour appliquer à la griffe 21b un moment dans le sens de la compression circonférentielle du segment contre la griffe 21a, ce qui en même temps appuie la surface extérieure du segment contre le ber "mobile" 19, compte tenu de l'orientation des extrémités 22a, 22b par rapport aux efforts qu'elles subissent de la part des griffes 21a, 21b. La force d'appui G exercée par la griffe commandée 21b suffit donc à établir sur les bers fixes 17 et mobile 19 les forces d'appui requises B,D, qui sont proportionnelles à G,la griffe fixe 21a recevant une force sensiblement égale, en grandeur, à celle appliquée par la griffe commandée 21b.La valeur de la force G, réglable à volonté par dosage du moment appliqué à l'arbre 39, conditionne donc l'ensemble des forces appliquées au segment, forces dont l'importance relative est déterminée une fois pour toutes par la position de l'axe d'articulation 35.

L'usinage et le positionnement très précis des surfaces de portée 28 des trois bers 17 et 19 peut s'effectuer très simplement, après démontage de la griffe fixe 21a et immobilisation du levier 34 relativement au plateau 16, par le travail d'une meule d'intérieur dont le profil correspond à celui voulu pour les bers 17 et 19, tandis que le plateau 16 est mis en rotation autour de l'axe ZZ'. Certes, l'axe ZZ' est légèrement excentré par rapport à l'axe UU' de la surface 18, mais cette excentration de l'ordre de 1/10ème de mm est sans incidence puisque le ber 19 sera, en service, mobile par rapport aux bers 17 dans la direction de l'excentration.

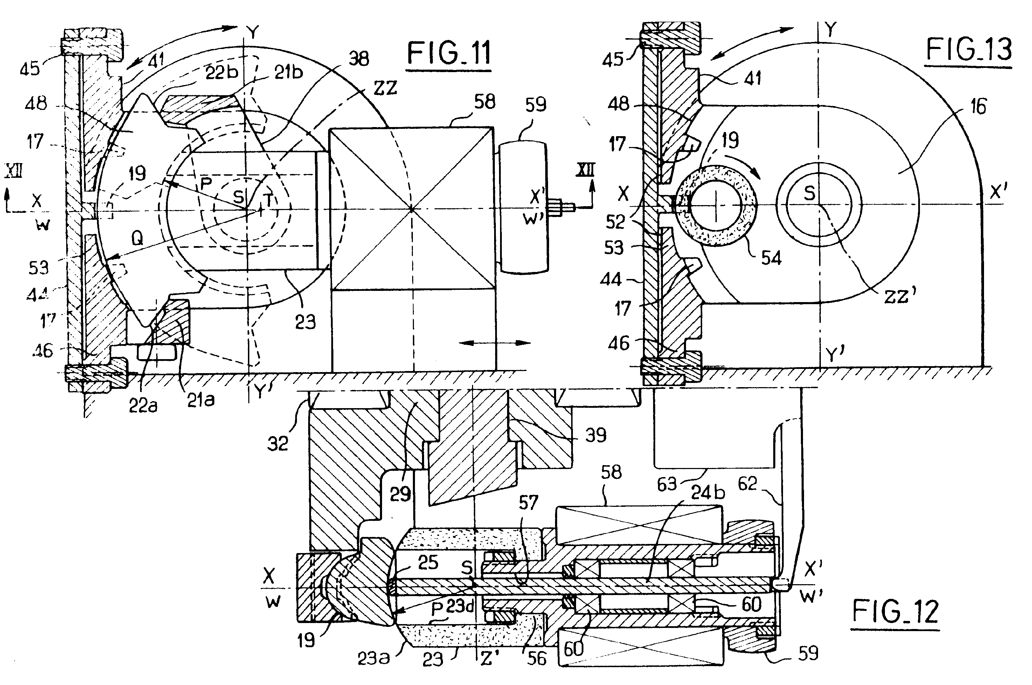

Le dispositif non représenté de commande des mouvements de la meule 23 le long de son axe MS peut être piloté par le signal délivré par un palpeur non représenté disposé comme représenté aux figures 7 ou 12 (la disposition selon la figure 12 sera décrite plus loin). La surface sphérique active 23a de la meule 23, telle que projetée sur le plan de la figue 10, est incluse entre les deux circonférences 40a et 40b.

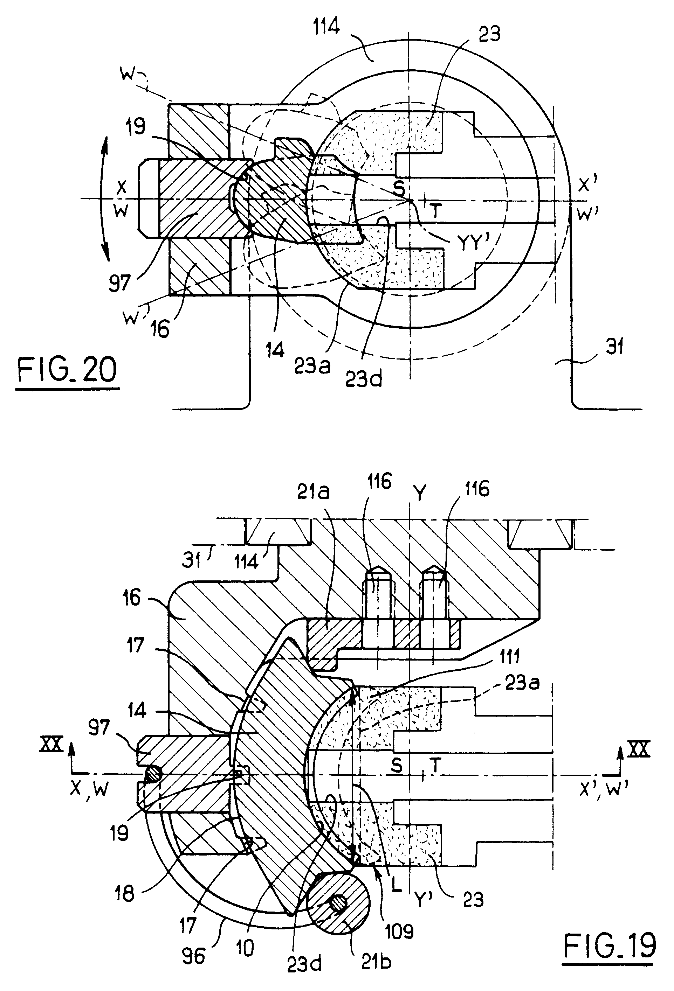

Dans le montage de la figure 9, l'axe UU' de la surface torique 18 du segment 14 est parallèle à l'axe ZZ' du mouvement de balayage mais peut être incliné par rapport à cet axe autour de l'axe WW', d'un angle pouvant aller jusqu'à 90°. Si cet angle est de 90°, on se trouve dans le cas du montage de la figure 20, qui sera décrit plus loin. La position du centre S situé sur l'axe ZZ' et celle du centre T du tore, ne sont pas modifiées. Seul le dispositif portant les trois bers et les deux griffes est incliné du même angle que l'axe du tore.

Le mode de réalisation des figures 11 à 13 ne sera décrit qu'en ce qui concerne ses différences par rapport au précédent, avec utilisation autant que possible des mêmes références aux figures.

Une lame élastique 44 est fixée à chacune de ses extrémités par des vis 45 à des pattes 46 usinées sur le plateau 16. La lame 44 porte à mi-distance entre ses extrémités précitées le ber mobile 19.

La griffe fixe 21a, fixée de manière rigide mais amovible au plateau 16, retient circonférentiellement l'extrémité 22a du segment 14, lui-même bloqué à son autre extrémité 22b par la griffe mobile 21b portée par le levier 38 commandé par l'arbre interne 39 coaxial à l'axe d'oscillation ZZ' du plateau 16.

L'usinage avec positionnement très précis des bers 17, 19 s'effectue en rectification au moyen d'une meule d'intérieur 54 présentant le profil précis requis (figure 13). On met en rotation le plateau 16 autour de son axe ZZ' après démontage de la butée fixe 21a. De plus, pendant l'opération, la lame flexible 44 est fléchie d'une valeur appropriée grâce à des cales 52 interposées entre la lame et des saillies 53 supportant les bers fixes.La valeur de l'effort de flexion ainsi exercée conditionnera la force d'appui du ber mobile 19 lors des opérations de rectification des segments dont la position est toujours définie relativement à l'axe ZZ' par les bers fixes 17.

Comme le montre la figure 12, dans cet exemple, le contrôle continu de la rectification s'effectue grâce à une tige ou palpeur interne 24b concentrique à l'axe de rotation de la meule 23, qui est ici l'axe XX' (autrement dit l'angle A est égal à zéro). La tige 24b s'étend dans un alésage 57 de l'arbre porte-meule 56. Cet arbre qui tourne à l'intérieur d'un palier spécial 58 de haute précision de technique connue, est entraîné par un moyen d'entraînement périphérique tel qu'une poulie 59.

La tige palpeur 24b est centrée à l'intérieur de l'arbre porte-meule 56 par des roulements 60 à l'intérieur desquels elle peut coulisser très librement selon l'axe XX'. La tige palpeur 24b qui porte la touche 25 commande le levier 62 du comparateur micrométrique figuré schématiquement en 63, qui délivre le signal d'asservissement de position de la meule dans la direction de son axe XX'.

Le principe de fonctionnement serait similaire si l'inclinaison A entre l'axe de la meule et l'axe XX' était non nul, par exemple tel que représenté à la figure 9.

Ainsi sont déclenchées les différentes phases de l'opération : approche, rectification, arrêt de l'avance de la meule et retrait de celle-ci, ainsi que l'éjection des segments usinés puis le chargement des segments à usiner.

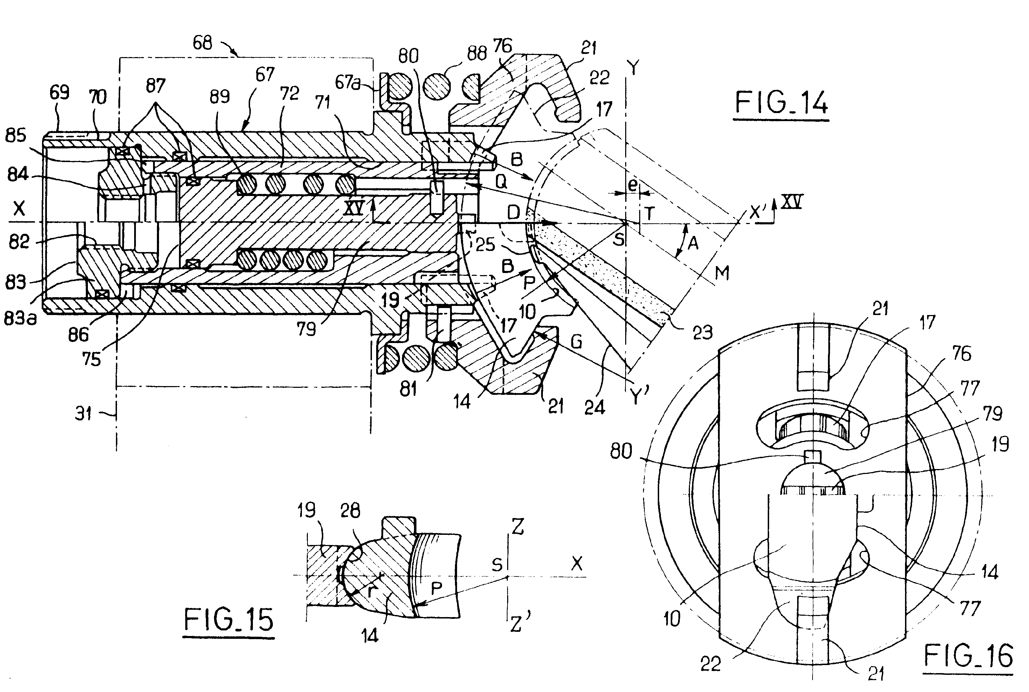

L'exemple de figures 14 à 16 ne sera décrit qu'en ce qui concerne ses différences par rapport à l'exemple précédent. Les numéros et les lettres de référence des exemples précédents seront autant que possible repris pour les éléments fonctionnellement identiques ou similaires.

L'exemple des figures 14 à 16 vise un deuxième mode de rectification, en ce sens que le mouvement rotatif du segment 14, par lequel il y a mouvement relatif de balayage de la portée sphérique 10 par la meule 23, est ici une rotation continue autour de l'axe XX'.

Les deux bers fixes 17 sont usinés au bout d'un arbre de broche 67, qui remplace en quelque sorte le plateau 16 des exemples précédents et qui est monté en rotation relativement au bâti 31 de la rectifieuse dans un palier 68 d'axe XX'. L'arbre de broche 67 est entraîné en rotation par une poulie non représentée, calée grâce à un filetage 69 et à un clavetage 70 à l'extrémité de cet arbre qui est opposée au segment 14 à usiner.

L'arbre 67 présente un alésage axial 71 qui reçoit un fourreau 72 portant en extrémité dirigée vers le segment 14 une platine 76 (figure 16) portant à son tour les deux griffes 21 développées radialement pour venir en appui sur les extrémités 22 du segment 14 à usiner. La platine 76 est ajourée en 77 (figure 16) pour laisser passage aux deux bers fixes 17 et permettre le déplacement axial relatif des griffes 21 par rapport à ceux-ci. Le ber central mobile 19 est porté par l'extrémité d'un piston 79 coulissant à l'intérieur du fourreau 72. Une clavette 80 assure le calage angulaire relatif du fourreau porte-griffes 72 et du piston 79, et une clavette 81 assure le calage angulaire relatif du fourreau 72 et de l'arbre 67. Le fourreau 72, le piston 79 et l'arbre 67 sont donc solidaires en rotation autour de l'axe XX'.

Les griffes 21 ainsi que le ber central mobile 19 sont actionnés hydrauliquement ou pneumatiquement. L'alimentation sous pression s'effectue par un raccord tournant fixé sur une entrée filetée 82 usinée dans un bouchon 83 vissé dans l'extrémité du fourreau 72 opposée au segment 14.

Une collerette 83a du bouchon 83 est appuyée (par vissage du bouchon 83 dans le fourreau 72) contre l'extrémité du fourreau et coulisse de manière étanche dans une région d'extrémité élargie de l'alésage 71 de l'arbre creux 67.

Un trou 84 ménagé à travers le bouchon 83, et une entaille 85 dans le bord du fourreau qui est appuyé contre la collerette 83a, permettent à la pression d'agir non seulement sur le fond du piston 75, mais également sur la section annulaire 86 comprise entre le diamètre extérieur de la collerette 83a et le diamètre extérieur, plus faible, du fourreau 72.

Trois garnitures 87 assurent l'étanchéité sous pression, avec possibilité de déplacement axial relatif, entre le piston 79 et le fourreau 72, entre le fourreau 72 et l'alésage de l'arbre creux 67, et entre la collerette 83a et la région d'extrémité élargie de l'alésage 71. L'application de la pression à l'entrée 82 du bouchon 83 se traduit ainsi par une force appliquée au piston 79, et par conséquent au ber mobile 19, dirigée vers le centre S, et par une force s'exerçant en sens opposé sur le fourreau 72, et par conséquent sur les griffes 21.

L'importance de la pression appliquée conditionne évidemment l'intensité des forces de maintien G, B, D. L'ensemble maintient le segment dans une position dans laquelle son axe médian est l'axe XX'.

Un ressort de compression 88 monté autour de l'arbre 67 et s'appuyant axialement sur l'arbre 67 (par l'intermédiaire d'une bague 67a) et sur la face arrière de la platine 76, rappelle les griffes 21 et le fourreau 72 axialement vers le centre S.

Un ressort de compression 89 monté dans le fourreau 72 autour du piston 79 rappelle le piston 79, et par conséquent le ber mobile 19, dans la direction axiale XX', dans le sens éloignant le ber 19 du centre S.

Comme représenté en haut de la figure 14, en l'absence de pression, les ressorts 88 et 89 sont relativement détendus et mettent les griffes 21 et le ber mobile 19 dans une position de libération du segment 14 (représenté en trait mixte).

Par contre, comme représenté en bas de la figure 14, la pression appliquée à l'entrée 82 génère des forces capables d'amener les griffes 21 et le ber 19 dans une position de serrage du segment à l'encontre de l'effet des ressorts 88 et 89.

L'avance de travail s'effectue comme dans les exemples précédents par avance de la meule 23 le long de son axe de rotation MS jusqu'à ce que le palpeur 24 détecte que le point de la portée sphérique 10 avec lequel il est en contact a une position correspondant à la coïncidence entre le centre réel de la portée sphérique 10 et le centre S voulu par celle-ci. Contrairement aux exemples précédents, la touche 25 est placée près du pourtour de la meule 23 et extérieurement à celle-ci. Le point de la portée 10 avec lequel la touche 25 est en contact est suffisamment proche de l'axe XX' pour que ce contact soit permanent au cours de la rotation du segment 14 autour de l'axe XX'.

Le palpeur 24 fournit le signal de position au dispositif d'asservissement commandant les mouvements de la meule selon la direction MS et déclenche l'électrovanne hydraulique ou pneumatique ainsi que le système non représenté d'alimentation et d'éjection des segments.

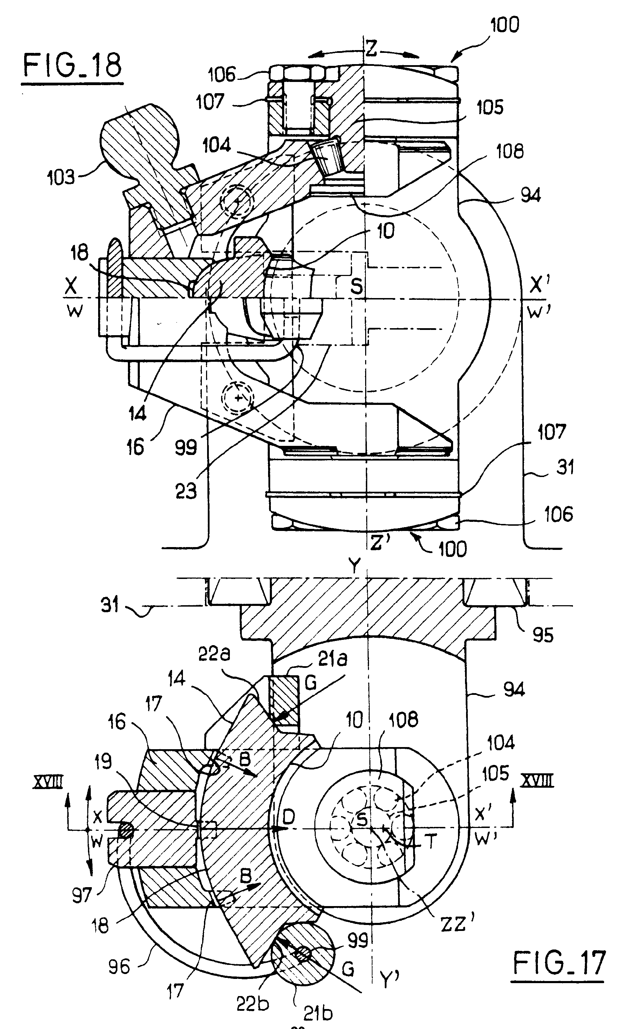

L'exemple des figures 17 à 18 ne sera décrit qu'en ce qui concerne ses différences par rapport à l'exemple précédent. Les numéros et les lettres de référence des exemples précédents seront autant que possible repris pour les éléments fonctionnellement identiques ou similaires.

L'exemple des figures 17 et 18 vise un troisième mode de rectification en ce sens que le mouvement relatif de balayage de la portée sphérique 10 par la meule 23 est ici un mouvement d'oscillation sphérique autour du centre S par combinaison de deux mouvements de rotation oscillants autour de deux axes perpendiculaires ZZ' et YY' se coupant au centre S voulu pour la portée sphérique 10. L'axe YY' est perpendiculaire à l'axe XX'.

Le segment 14 est positionné sur les bers fixes 17 qui sont usinés à l'intérieur d'un berceau 16 articulé à la cardan par rapport au bâti 31 de la machine.

Plus précisément, le berceau 16 est articulé autour de l'axe ZZ' à une chape de cardan 94 qui oscille elle-même autour de l'axe YY' dans un palier 95 solidaire du bâti 31.

Le palier 95 est un palier de grande précision de type connu. Il définit donc avec une grande précision la position de l'axe YY' par rapport au bâti 31.

Le mouvement oscillant autour de l'axe ZZ' s'effectue au moyen de deux articulations coaxiales 100 à rouleaux coniques 104 dont le cône central 105 est fixé à la chape 94 par des vis 106 avec possibilité de réglage le long de l'axe ZZ' par interposition de cales calibrées 107. Ainsi, on peut résorber les jeux dans les articulations 100 et en même temps positionner le berceau 16 avec précision le long de l'axe ZZ' de manière que le plan ciconférentiel du segment, tel que défini par les bers 17, passe par le point S d'intersection des axes YY' et ZZ'. L'étanchéité des articulations 100 est assurée par une plaque de fermeture 108 fixée au berceau 16 face à l'extrémité du cône 105 et par des garnitures d'étanchéité non représentées.

Il est à noter que dans ce mode de rectification, et contrairement aux précédents, l'axe ZZ' n'est pas fixe par rapport au bâti puisqu'il est solidaire de la chape 94 qui pivote autour de l'axe YY' par rapport au bâti.

Le berceau 16 porte une rotule 103 de commande du mouvement oscillant autour de l'axe ZZ'. La rotule 103 est destinée à être articulée à une biellette actionnée en va-et-vient au moyen d'une manivelle. Le mouvement autour de l'axe YY' peut, de manière non représentée, être commandé par action sur la chape 94 du côté du palier 95 qui est opposé au berceau 16.

Le blocage du segment 14 contre les bers fixes 17 s'effectue au moyen d'un étrier élastique 96 articulé sur un plongeur 97 qui est monté coulissant dans le berceau 16 selon l'axe médian WW' du segment. Le plongeur 97 porte le ber mobile central 19. L'étrier 96 a deux extrémités recourbées 99 qui sont engagées de manière articulée dans l'alésage central d'un galet constituant la griffe 21b et venant par conséquent presser l'extrémité 22b du segment 14. L'étrier élastique 96 assure donc à la fois la force pressante sur l'extrémité 22b et la force d'appui du ber central 19 sur le segment 14. L'autre extrémité 22a du segment vient en appui sur la griffe 21a qui est fixée de manière démontable au berceau 16.

Le chargement du segment 14 et son blocage sur les bers 17, 19 par l'étrier 96 s'opèrent lorsque le dispositif est immobile. Les valeurs relatives des forces de maintien B, D, G sont déterminées par la position des points d'articulation de l'étrier 96 sur le plongeur 97 et sur le galet 21b, et leur intensité est déterminée par la raideur à l'extension de l'étrier 96.

Les amplitudes des deux rotations, autour de l'axe YY' et respectivement autour de l'axe ZZ', peuvent être avantageusement différentes et réglées pour balayer au mieux l'aire de la portée sphérique concave 10. Les fréquences de ces oscillations sont définies en fonction de l'opération à réaliser.

Cette opération peut être une opération de rectification, comme dans les exemples décrits jusqu'à présent, ou encore une opération de superfinition par pierrage, opération qui succède à l'opération de rectification. En effet, le présent mode d'usinage avec mouvement de balayage autour de deux axes perpendiculaires, se prête particulièrement bien à la superfinition par pierrage.

La superfinition par pierrage est une opération ayant pour but de réduire la rugosité de la surface par écrêtage des mircoprofils résultant de la rectification préalable, mais sans modifier la géométrie, ce qui rend inutile le contrôle dimensionnel continu pour cette opération.

Pour l'opération de superfinition par pierrage, l'outil abrasif est approché de la portée sphérique 10 rectifiée selon un axe passant par le centre S. Il peut s'agir de l'axe XX' qui est l'axe perpendiculaire à l'axe YY' et à la position moyenne de l'axe ZZ'. Il peut également s'agir d'un axe tel que l'axe MS des exemples précédents, formant un angle A avec l'axe XX'. Par ce mouvement d'approche, on applique souplement l'abrasif, qui présente une surface de travail sphérique convexe complémentaire de celle du segment 14, contre la surface sphérique concave pendant que le segment oscille autour des axes ZZ' et YY' a une fréquence plus élevée que pour l'opération de rectification.

Si au contraire on désire procéder à une opération de rectification, on peut, comme représenté à la figure 18 disposer la meule selon l'axe XX', la faire avancer le long de cet axe, et la faire tourner autour de cet axe, le contrôle continu de la cote d'usinage pouvant être effectué au moyen d'une tige coulissante actionnant un comparateur comme représenté à la figure 12.

Le profil des bers fixes 17 est rectifié par oscillation du berceau 16 autour de son axe ZZ'.

L'exemple des figures 19 et 20 vise une variante simplifiée du troisième mode d'usinage, en ce sens que le mouvement rotatif du segment 14, par lequel il y a mouvement relatif de balayage de la portée sphérique 10 par la meule 23 est ici une rotation en va-et-vient autour de l'axe YY'. Cet exemple ne sera décrit qu'en ce qui concerne ses différences par rapport au précédent, avec autant que possible les mêmes numéros et lettres de références.

Le corps 16, qui porte les bers fixes 17, est articulé au bâti 31 par l'intermédiaire d'un palier 114 d'axe YY'. Le montage du bers mobile 19 et de la griffe mobile 21b est identique à celui des figures 17 et 18. La griffe fixe 21a est fixée au corps 16 au moyen de deux vis 116.

Comme le montre la figure 19, la meule 23 doit présenter un diamètre extérieur 109 superieur à l'ouverture L du segment, ceci afin que l'ensemble de l'aire de la portée sphérique 10 soit balayé par le mouvement autour de l'axe YY'.

Cependant, dans les positions d'oscillation maximum, la portée du segment 10 doit déborder la couronne sphérique coupante 23a de la meule 23, comme représenté en 111 à la figure 19.

Enfin, le diamètre de l'alésage 23d de la meule doit être suffisamment petit pour que, au voisinage de la demi-longueur circonférentielle de la portée 10, il y ait un large recouvrement entre les zones usinées dans chaque position extrême d'oscillation.

Le contrôle micrométrique continu peut être assuré par un palpeur dont une tige de transmission passe à l'intérieur de la meule 23 comme cela est représenté figure 12. L'axe de la meule est l'axe XX' qui se trouve dans le plan circonférentiel du segment lorsque celui-ci est à mi-course d'oscillation autour de l'axe YY'.

Les procédés et dispositifs proposés selon la présente demande permettent de réaliser économiquement en grande série la rectification de portées sphériques concaves précises avec positionnement rigoureux du centre sphérique S relativement au centre T de la surface cylindrotorique extérieure formée à froid préalablement et traitée thermiquement. L'excentration e requise entre les deux centres T et S n'est en pratique que de quelques dixièmes de millimètre, de sorte que la moindre erreur de positionnement du centre sphérique relativement au tore irait à l'encontre du but recherché qui est le rappel en position médiane du segment pendant le fonctionnement du joint. Or, grâce au système des deux bers fixes et du ber mobile, le dispositif proposé permet d'obtenir à coup sûr et automatiquement le positionnement précis indispensable du centre S, bien qu'utilisant une surface de référence torique formée à froid et traitée thermiquement, et donc présentant de ce fait des distorsions géométriques inévitables. Par ailleurs, la cote radiale d'épaisseur maximum du segment entre les bers fixes et la surface sphérique rectifiée par la meule conditionne l'encombrement radial maximum des deux segments montés sur un tourillon qui s'assemblent entre des chemins de roulement du joint coulissant. Le procédé et le dispositif selon l'invention garantissent parfaitement cette cote radiale, ce qui assure un assemblage du joint avec le minimum de jeu, sans risque de blocage par interférence mécanique. Enfin, la rectification par génération utilisée, assure d'une manière durable l'exécution d'une sphéricité parfaite des portées sphériques concaves. La surface de coupe de la meule se profile d'elle-même pendant le travail.

Les traces de rectification observables sur la portée sphérique concave terminée sont curvilignes inclinées sur le plan médian du tore, et par place entrecroisées. Elles ne sont pas de révolution comme c'est le cas pour une rectification d'intérieur conventionnelle. Cette caractéristique est favorable à la réduction de rugosité de la portée sphérique concave et à l'établissement du film micrométrique hydrodynamique de lubrifiant lors du fonctionnement du joint en utilisation.

Bien entendu, l'invention n'est pas limitée aux exemples décrits et représentés.

En particulier, on a représenté différents exemples dont chacun se caractérise par un mode particulier de fixation du segment et un mode particulier d'usinage. Il est possible de combiner différemment les modes particuliers de fixation du segment et les modes particuliers d'usinage.

En ce qui concerne le mouvement relatif de balayage autour de deux axes (exemple des figures 17 et 18), on peut envisager d'autres structures pratiques assurant un positionnement précis des axes et une possibilité de résorber les jeux. Les mouvements d'oscillation autour des deux axes peuvent être commandés par des générateurs d'oscillation électromagnétiques.

Les procédés et dispositifs de maintien en position des segments sont utilisables en vue par exemple d'usiner une portée intérieure de tourillonnement cylindrique, pour des joints homocinétiques de type différent de ceux décrits au début, ou encore pour usiner une portée sphérique dont le centre coïnciderait avec celui de la surface extérieure de roulement.

## Revendications

1. Procédé pour maintenir en position, en vue de l'usinage d'une portée de tourillonnement concave (10), un segment de galet (14), notamment pour joint de transmission pour automobile, comprenant une surface extérieure de roulement (18) à profil transversal arrondi, caractérisé en ce que :

  – on place la surface extérieure de roulement (18) contre deux bers de positionnement (17) solidaires l'un de l'autre et espacés circonférentiellement l'un de l'autre ;

  – on immobilise le segment (14) à l'égard des rotations autour d'un axe (VV') passant sensiblement par les centres (C) des profils des deux bers de positionnement (17) ; et

– on applique à chaque extrémité (22 ; 22a, 22b) du segment (14) un effort de compression (G) ayant une orientation sensiblement tangentielle relativement à l'axe (UU') de la surface extérieure de roulement (18).

2. Procédé conforme à la revendication 1, caractérisé en ce que pour immobiliser le segment à l'égard des rotations autour d'un axe (VV') passant sensiblement par les centres des profils des deux bers de positionnement (17), on applique sur la surface extérieure de roulement (18) un troisième ber (19) mobile par rapport aux deux bers de positionnement (17) selon une direction sensiblement radiale relativement à l'axe (UU') de la surface extérieure de roulement (18).

3. Procédé conforme à la revendication 2, caractérisé en ce qu'on applique le troisième ber (19) sensiblement à mi-distance entre les deux bers de positionnement (17).

4. Procédé pour maintenir en position, en vue de l'usinage d'une portée de tourillonnement concave, un segment de galet (10), notamment pour joint de transmission pour l'automobile, comprenant une surface extérieure de roulement (18) à profil transversal arrondi, caractérisé en ce que :
   – on place la surface extérieure de roulement (18) contre deux bers de positionnement (17) solidaires l'un de l'autre et espacés circonférentiellement l'un de l'autre ;
   – on applique à chaque extrémité (22) du segment (14) un effort de compression (G) ayant une orientation sensiblement tangentielle relativement à l'axe (UU') de la surface extérieure de roulement (18) ; et
   – on applique sensiblement à mi-longueur circonférentielle du segment (14) un effort (D) dirigé radialement vers l'intérieur de la surface extérieure de roulement (18).

5. Procédé conforme à l'une des revendications 1 à 4, caractérisé en ce qu'on dirige chaque effort de compression (G) vers le ber de positionnement (17) qui est circonférentiellement le plus proche.

6. Procédé conforme à l'une des revendications 1 à 5, caractérisé en ce qu'on positionne angulairement le segment (14) autour de l'axe (UU') de sa surface extérieure de roulement (18) par rapport aux bers de positionnement (17).

7. Procédé conforme à la revendication 6, caractérisé en ce que pour appliquer un effort de compression (G) à chaque extrémité du segment et en même temps positionner angulairement le segment autour de l'axe (UU') de sa surface extérieure de roulement (18), on appuie l'une (22a) des extrémités du segment contre une griffe (21a) immobilisée à l'égard des déplacements circonférentiels, cet appui étant réalisé en faisant agir sur l'autre extrémité (22b) du segment une griffe (21b) mobile circonférentiellement.

8. Procédé conforme à la revendication 6, caractérisé en ce que pour appliquer un effort de compression (G) à chaque extrémité du segment et en même temps positionner angulairement le segment autour de l'axe (UU') de sa surface extérieure de roulement (18), on applique sur lesdites extrémités deux griffes (21) qui, par rapport aux bers de positionnement (17), sont mobiles ensemble sensiblement parallèlement à un axe médian (XX') du segment (14).

9. Dispositif pour maintenir en position, en vue de l'usinage d'une portée de tourillonnement concave (10), un segment de galet (14), notamment pour joint de transmission pour l'automobile, comprenant une surface extérieure de roulement (18) à profil transversal arrondi, caractérisé en ce qu'il comprend :
   – deux bers de positionnement (17) solidaires l'un de l'autre, destinés à donner appui à la surface extérieure de roulement (18), et espacés circonférentiellement l'un de l'autre ;
   – des moyens (19) pour immobiliser le segment (14) à l'égard des rotations autour d'un axe (VV') passant sensiblement par les centres (C) des profils des deux bers de positionnement (17) ;
   – deux griffes (21 ; 21a, 21b) dont l'une au moins est mobile par rapport aux bers de positionnement (17), pour appliquer aux deux extrémités (22 ; 22a, 22b) du segment (14) un effort de compression (G) ayant une orientation sensiblement tangentielle relativement à l'axe (UU') de la surface extérieure de roulement (18).

10. Dispositif conforme à la revendication 9, caractérisé en ce que les moyens pour immobiliser le segment (14) à l'égard des rotations autour d'un axe (VV') passant sensiblement par les centres des profils des deux bers de positionnement (17) comprennent un troisième ber (19) mobile par rapport aux bers de positionnements (17), ainsi que des moyens (44, 79, 96) pour solliciter le troisième ber (19) en appui contre la surface extérieure de roulement (18).

11. Dispositif conforme à la revendication 10, caractérisé en ce que le troisième ber (19) est sollicité élastiquement vers la surface extérieure de roulement (18).

12. Dispositif conforme à la revendication 11, caractérisé en ce que le troisième ber est porté par une lame souple (44) rendue solidaire des bers de positionnement (17) à distance du troisième ber (19).

13. Procédé pour usiner les bers (17, 19) d'un dispositif selon l'une des revendications 11 ou 12, caractérisé en ce qu'on cale le troisième ber par rapport aux deux bers de positionnement (17) et on usine ensemble les trois bers (17, 19) par une même rotation autour d'un axe (ZZ') dont la position, par rapport aux trois bers, correspond sensiblement à celle qui sera ultérieurement souhaitée pour l'axe (UU') de la surface extérieure de roulement (18) des segments à usiner (14).

14. Procédé conforme à la revendication 13, appliqué à la réalisation d'un dispositif dans lequel le troisième ber (19) est, en service, appuyé élastiquement contre le segment à usiner (14), caractérisé en ce que pour caler le troisième ber (19), on agit à l'encontre du rappel élastique de manière que l'effort de calage corresponde à la force d'appui élastique souhaitée sur la surface extérieure de roulement de la part du troisième ber.

15. Dispositif conforme à la revendication 9, caractérisé en ce que le troisième ber (19) et l'une des griffes (21a) sont portées par un levier (34) articulé relativement aux deux bers de positionnement (17) autour d'un axe (35) voisin de l'autre griffe (21b).

16. Dispositif conforme à la revendication 10, caractérisé en ce qu'il comprend un corps (67) dont les deux bers de positionnement (17) sont solidaires ;
  – un premier équipage mobile (72, 76, 83) dont sont solidaires les deux griffes (21) ;
  – un deuxième équipage mobile (79) dont est solidaire le troisième ber (19) ;
  – le premier et le deuxième équipage pouvant coulisser par rapport au corps (67) parallèlement à un axe médian (XX') du segment (14).

17. Dispositif conforme à la revendication 16, caractérisé en ce que le corps (67), le premier équipage (72, 74, 83) et le deuxième équipage (79) sont disposés les uns dans les autres coaxialement avec l'axe médian (XX') du segment (14) et associés à des chambres de travail pour fluide sous pression (85) pour déplacer les équipages vers leur position d'appui contre le segment (14) à l'encontre de ressorts de rappel (88, 89).

18. Dispositif conforme à l'une des revendications 16 ou 17, caractérisé en ce que le corps (67) et les deux équipages (72, 76, 83 ; 79) sont rendus solidaires en rotation autour de l'axe médian (XX') du segment (14), et munis de moyens (69, 70) d'entraînement en rotation autour dudit axe (XX').

19. Dispositif conforme à la revendication 10, caractérisé en ce que l'une des griffes (21a) est solidaire des deux bers de positionnement (17) et l'autre (21b) est mobile par rapport à ceux-ci et en ce qu'un étrier élastique (96) s'appuie sur le troisième ber (19) et sur la griffe mobile (21b) pour, à la fois, solliciter le troisième ber (19) contre la surface extérieure de roulement (18) et solliciter la griffe mobile (21b) contre l'extrémité de segment associée.

20. Dispositif conforme à l'une des revendications 9 ou 10, caractérisé en ce que certains au moins des bers (17, 19) présentent deux surfaces d'appui (28) présentant entre elles une distance parallèle à l'axe (UU') de la surface extérieure de roulement (18).

21. Dispositif conforme à l'une des revendications 9 ou 10, caractérisé en ce que l'une des griffes (21a) est immobilisée par rapport aux bers de positionnement (17) à l'égard des déplacements selon la direction circonférentielle du segment (14) et l'autre (21b) est mobile selon cette direction par rapport aux bers de positionnement (17) pour appliquer le segment contre la griffe immobilisée (21a) et positionner ainsi circonférentiellement le segment (14) relativement aux bers de positionnement (17).

22. Dispositif conforme à la revendication 21, caractérisé en ce que la griffe immobilisée (21a) est démontable.

23. Dispositif conforme à l'une des revendications 9 ou 10, caractérisé en ce que les deux griffes (21) sont solidaires l'une de l'autre et mobiles ensemble par rapport aux bers de positionnement (17) selon une direction parallèle à un axe médian (XX') du segment (14), de manière à positionner circonférentiellement le segment relativement aux bers (17) lorsqu'elles sont appuyées contre les extrémités (22) du segment.

## Patentansprüche

1. Verfahren zum Fethalten eines Rollensegments (14) angesichts der Bearbeitung einer konkaven Tragfläche (10) für einen Gelenkzapfen, vor allem für ein Antriebsgelenk eines Kraftfahrzeuges, welches eine äußere Lauffläche (18) mit abgerundetem Querschnittsprofil umfaßt, dadurch gekennzeichnet, daß
  – die äußere Lauffläche (18) gegen zwei Einstellhalter (17) gebracht wird, die miteinander verbunden und am Umfang mit Abstand zueinander angeordnet sind;
  – das Segment (14) in Bezug auf Drehungen um eine Achse (VV') festgestellt wird, die im wesentlichen durch die Mittelpunkte (C) der Querschnitte der beiden Einstellhalter (17) führt; und
  – an jedem Ende (22; 22a; 22b) des Segments (14) eine Druckkraft (G) ausgeübt wird, die im Verhältnis zur Achse (UU') der äußeren Lauffläche (18) eine im wesentlichen tangentiale Ausrichtung aufweist.

2. Verfahren nach Anspruch 1, dadurch gekennzeichnet, daß zum Festhalten des Segments in Bezug auf Drehungen um eine Achse (VV'), die im wesentlichen durch die Mittelpunkte (C) der Querschnitte der beiden Einstellhalter (17) führt, an der äußeren Lauffläche (18) ein dritter Halter (19) angeordnet wird, der im Verhältnis zu den beiden Einstellhaltern (17) in einer im Verhältnis zur Achse (UU') der äußeren Lauffläche (18) im wesentlichen radialen Richtung beweglich ist.

3. Verfahren nach Anspruch 2, dadurch gekennzeichnet, daß der dritte Halter (19) im wesentlichen in der Mitte zwischen den beiden Einstellhaltern (17) angeordnet wird.

4. Verfahren zum Festhalten eines Rollensegments (14) angesichts der Bearbeitung einer konkaven Tragfläche (10) für einen Gelenkzapfen, vor allem für ein Antriebsgelenk eines Kraffahrzeuges, welches eine äußere Lauffläche (18) mit abgerundetem Querschnittsprofil umfaßt, dadurch gekennzeichnet, daß

– die äußere Lauffläche (18) gegen zwei Einstellhalter (17) gebracht wird, die miteinander verbunden und am Umfang mit Abstand zueinander angeordnet sind;

– an jedem Ende (22) des Segments (14) eine Druckkraft (G) ausgeübt wird, die im Verhältnis zur Achse (UU') der äußeren Lauffläche (18) eine im wesentlichen tangentiale Ausrichtung aufweist; und auf halber Umfangslänge des Segments (14) eine Kraft (D) ausgeübt wird, die radial nach innen auf die äußere Lauffläche (18) gerichtet ist.

5. Verfahren nach einem der Ansprüche 1 bis 4, dadurch gekennzeichnet, daß jede Druckkraft (G) gegen jenen Einstellhalter (17) gerichtet wird, der auf dem Umfang der nächstliegende ist.

6. Verfahren nach einem der Ansprüche 1 bis 5, dadurch gekennzeichnet, daß das Segment (14) um die Achse (UU') seiner äußeren Lauffläche (18) im Verhältnis zu den Einstellhaltern (17) winkelig angeordnet wird.

7. Verfahren nach Anspruch 6, dadurch gekennzeichnet, daß zur Ausübung einer Druckkraft (G) auf jedes Ende des Segments und zur gleichzeitigen winkeligen Anordnung des Segments um die Achse (UU') seiner äußeren Lauffläche (18) eines der Enden (22a) des Segments gegen einen Greifer (21a) ruht, der in Bezug auf Umfangsverschiebungen festgestellt ist, wobei diese Auflage erzielt wird, indem auf das andere Ende (22b) des Segments ein Greifer (21b) wirkt, der in Umfangsrichtung beweglich ist.

8. Verfahren nach Anspruch 6, dadurch gekennzeichnet, daß zur Ausübung einer Druckkraft (G) auf jedes Ende des Segments und zur gleichzeitigen winkeligen Anordnung des Segments um die Achse (UU') seiner äußeren Lauffläche (18) an diesen äußeren Enden zwei Greifer (21) verwendet werden, die in Bezug auf die Einstellhalter (17) gemeinsam im wesentlichen parallel zu einer Mittelachse (XX') des Segments (14) beweglich sind.

9. Vorrichtung zum Festhalten eines Rollensegments (14) angesichts des Bearbeitung einer konkaven Tragfläche (10) für einen Gelenkzapfen, vor allem für ein Antriebsgelenk eines Kraftfahrzeuges, welches eine äußere Lauffläche (18) mit abgerundetem Querschnittsprofil umfaßt, dadurch gekennzeichnet, daß sie folgendes umfaßt

– zwei Einstellhalter (17) zum Abstützen der äußeren Lauffläche (18), die miteinander verbunden sind und am umfang mit Abstand zueinander angeordnet sind;

– Mittel (19) zum Festhalten des Segments (14) in Bezug auf Drehungen um eine Achse (VV'), die im wesentlichen durch die Mittelpunkte (C) der Querschnitte der beiden Einstellhalter (17) führt;

– zwei Greifer (21; 21a, 21b), von welchen zumindest einer in Bezug auf die Einstellhalter (17) beweglich ist, um auf die beiden Enden (22; 22a; 22b) des Segments (14) eine Druckkraft (G) auszuüben, die im Verhältnis zur Achse (UU') der äußeren Lauffläche (18) eine im wesentlichen tangentiale Ausrichtung aufweist.

10. Vorrichtung nach Anspruch 9, dadurch gekennzeichnet, daß die Mittel zum Festhalten des Segments (14) in Bezug auf Drehungen um eine Achse (VV'), die im wesentlichen durch die Mittelpunkte (C) der Querschnitte der beiden Einstellhalter (17) führt, einen dritten Halter (19) umfassen, der in Bezug auf die beiden Einstellhalter (17) beweglich ist, sowie Mittel (44, 79, 96), um den dritten Halter (19) gegen die äußere Lauffläche (18) zu halten.

11. Vorrichtung nach Anspruch 10, dadurch gekennzeichnet, daß der dritte Halter (19) federnd gegen die äußere Lauffläche (18) gehalten wird.

12. Vorrichtung nach Anspruch 11, dadurch gekennzeichnet, daß der dritte Halter von einem elastischen Blatt (44) getragen wird, das mit den Einstellhaltern (17) mit Abstand zu dem dritten Halter (19) verbunden ist.

13. Verfahren zur Bearbeitung der Halter (17, 19) einer Vorrichtung nach einem der Ansprüche 11 oder 12, dadurch gekennzeichnet, daß der dritte Halter im Verhältnis zu den beiden Einstellhaltern (17) festgekeilt wird und daß die beiden Halter (17, 19) gemeinsam bearbeitet werden, durch dieselbe Drehung um eine Achse (ZZ'), deren Lage in Bezug auf die drei Halter im wesentlichen jener entspricht, die später für die Achse (UU') der äußeren Lauffläche (18) der zu bearbeitenden Segmente (14) gewünscht wird.

14. Verfahren nach Anspruch 13, das zur Herstellung einer Vorrichtung angewendet wird, in welcher der dritte Halter (19) im Betrieb federnd gegen das zu bearbeitende Segment (14) gehalten ist, dadurch gekennzeichnet, daß zur Verkeilung des dritten Halters (19) eine derartige Wirkung gegen die federnde Rückwärtsbewegung ausgeübt wird, daß die Wirkung der Verkeilung dem federnden Auflagedruck entspricht, der später an der äußeren Lauffläche von Seiten des dritten Halters gewünscht wird.

15. Vorrichtung nach Anspruch 9, dadurch gekennzeichnet, daß der dritte Halter (19) und einer der Greifer (21a) von einem Hebel (34) getragen werden, der in Bezug auf die beiden Einstellhalter (17) um eine Achse (35) in der Nähe des anderen Greifers (21b) angelenkt ist.

16. Vorrichtung nach Anspruch 10, dadurch gekennzeichnet, daß sie einen Körper (67) umfaßt, mit dem die beiden Einstellhalter (17) verbunden sind;

– sowie ein erstes bewegliches Organ (72, 76, 83), mit dem die beiden Greifer (21) verbunden sind;

– sowie ein zweites bewegliches Organ (79), mit dem der dritte Halter (19) verbunden ist;

– wobei das erste und zweite Organ in Bezug auf den Körper (67) parallel zu einer Mittelachse (XX') des Segments (14) verschoben werden können.

17. Vorrichtung nach Anspruch 16, dadurch gekennzeichnet, daß der Körper (67), das erste Organ (72, 74, 83) und das zweite Organ (79) ineinander koaxial mit der Mittelachse (XX') des Segments (14) angeordnet sind und mit Betriebskammern für Druckflüssigkeit (85) verbunden sind, um die Organe in ihre Auflagestellung an dem Segment (14) gegen die Wirkung von Spannfedern (88, 89) zu verschieben.

18. Vorrichtung nach einem der Ansprüche 16 oder 17, dadurch gekennzeichnet, daß der Körper (67) und die beiden Organe (72, 76, 83; 79) zur Drehung um die Mittelachse (XX') des Segments (14) miteinander verbunden sind und mit Mitteln (69, 70) versehen sind, welche die Drehung um diese Achse (XX') bewirken.

19. Vorrichtung nach Anspruch 10, dadurch gekennzeichnet, daß einer der Greifer (21a) mit den beiden Einstellhaltern (17) verbunden ist und der andere Greifer (21b) in Bezug auf diese beweglich ist, und daß ein federnder Bügel (96) auf dem dritten Halter (19) und auf dem beweglichen Greifer (21b) aufliegt, um gleichzeitig den dritten Halter (19) gegen die äußere Lauffläche (18) und den beweglichen Greifer (21b) gegen das Ende des zugehörigen Segments zu halten.

20. Vorrichtung nach einem der Ansprüche 9 oder 10, dadurch gekennzeichnet, daß zumindest einige der Halter (17, 19) zwei Auflageflächen (28) aufweisen, zwischen welchen ein Abstand parallel zur Achse (UU') der äußeren Lauffläche (18) ausgebildet ist.

21. Vorrichtung nach einem der Ansprüche 9 oder 10, dadurch gekennzeichnet, daß einer der Greifer (21a) in Bezug auf die Einstellhalter (17) hinsichtlich von Verschiebungen in Umfangsrichtung des Segments (14) festgestellt ist und der andere Greifer (21b) in diese Richtung in Bezug auf die Einstellhalter (17) beweglich ist, um das Segment gegen den unbeweglichen Greifer (21a) zu halten und somit das Segment (14) entlang des Umfangs im Verhältnis zu den Einstellhaltern (17) auszurichten.

22. Vorrichtung nach Anspruch 21, dadurch gekennzeichnet, daß der unbewegliche Greifer (21b) ausbaubar ist.

23. Vorrichtung nach einem der Ansprüche 9 oder 10, dadurch gekennzeichnet, daß die beiden Greifer (21) miteinander verbunden sind und gemeinsam in Bezug auf die Einstellhalter (17) in einer Richtung parallel zu einer Mittelachse (XX') des Segments (14) beweglich sind, so daß das Segment im Verhältnis zu den Haltern (17) entlang des Umfangs positioniert werden kann, wenn die Greifer gegen die Enden (22) des Segments liegen.

## Claims

1. Method for holding in position for the purpose of machining a concave pivot bearing surface (10), a roller segment (14), in particular for a motor vehicle transmission joint, comprising an external rolling surface (18) with a rounded transverse profile, characterized in that:
 – the external rolling surface (18) is placed against two positioning seats (17) joined to each other and being circumferentially interspaced from each other;
 – the segment (14) is immobilized with regard to rotations about an axis (VV') substantially passing through the centres (C) of the profiles of the two positioning seats (17); and
 – at each end (22; 22a, 22b) of the segment (14), a compressive force (G) is applied, having a substantially tangential orientation relative to the axis (UU') of the external rolling surface (18).

2. Method according to claim 1, characterized in that for immobilizing the segment with regard to rotations round an axis (VV') substantially passing through the centres of the profiles of the two positioning seats (17), there is applied to the external rolling surface (18), a third seat (19) which is movable relative to the two positioning seats (17) along a substantially radial direction in relation to the axis (U,U') of the external rolling surface (18).

3. Method according to claim 2, characterized in that the third seat (19) is applied substantially midway between the two positioning seats (17).

4. Method for holding in position for the purpose of machining a concave pivot bearing surface, a roller segment (10), in particular for a motor vehicle transmission joint, comprising an external rolling surface (18) with a rounded transverse profile, characterized in that:
 – the external rolling surface (18) is placed against two positioning seats (17) joined to each other, and being circumferentially interspaced from each other;
 – at each end (22) of the segment (14), a compressive force (G) is applied having a substantially tangential orientation relative to the axis (UU') of the external rolling surface (18); and
 – a force (D) directed radially towards the inside of the external rolling surface (18) is applied substantially midway on the circumference of the segment (14).

5. Method according to one of claims 1 to 4, characterized in that each compressive force (G) is directed towards the positioning seat (17) which is circumferentially the nearest

6. Method according to one of claims 1 to 5, characterized in that the segment (14) is angularly positioned round the axis (UU') of its external rolling surface (18) relative to the positioning seats (17).

7. Method according to claim 6, characterized in that, in order to apply a compressive force (G) to each end of the segment and to position at the same time the segment angularly round the axis (UU') of its external rolling surface (18), one applies one end (22a) of the ends of the segment to a claw (21a) immobilized with regard to circumferential displacement, this bearing action being obtained by causing a circumferentially movable claw (21b) on the other end (22b) of the segment.

8. Method according to claim 6, characterized in that in order to apply a compressive force (G) to each end of the segment, and at the same time to position the segment angularly round the axis (UU') of its external rolling surface (18), one applies to the said ends, two claws (21) which are jointly movable relative to the positioning seats (17) substantially parallel to a median axis (XX') of the segment (14).

9. Device for holding in position, for the purpose of machining a concave pivot bearing surface (10), a roller segment (14,) in particular for a motor vehicle transmission joint, comprising an external rolling surface (18) with a rounded transverse profile, characterized in that it comprises:

– two positioning seats (17) joined to each other, intended to provide support for the external rolling surface (18) and being circumferentially interspaced from each other;
– means (19) for immobilizing the segment (14) with regard to rotations round an axis (VV') substantially passing through the centres (C) of the profiles of the two positioning seats (17);
– two claws (21; 21a, 21b) whereof at least one is movable in relation to the positioning seats (17) for applying to the two ends (22; 22a, 22b) of the segment (14), a compressive force (G) having a substantially tangential orientation relative to the axis (UU') of the external rolling surface (18).

10. Device according to claim 9, characterized in that the means for immobilizing the segment (14) with regard to rotations round an axis (VV') substantially passing through the centres of the profiles of the two positioning seats (17) include a third seat (19) movable in relation to the positioning seats (17), as well as means (44, 79, 96) for urging the third seat (19) to bear against the external rolling surface (18).

11. Device according to claim 10, characterized in that the third seat (19) is urged resiliently towards the external rolling surface (18).

12. Device according to claim 11, characterized in that the third seat is carried by a flexible strip (44) joined to the positioning seats (17) at a distance from the third seat (19).

13. Method for machining the seats (17, 19) of a device according to one of claims 11 or 12, characterized in that the third seat is wedged relative to the two positioning seats (17) and that the three seats (17, 19) are machined together by the same rotation round an axis (Z Z') whose position relative to the three seats substantially corresponds to that which will be subsequently desired for the axis (UU') of the external rolling surface (18) of the segments (14) to be machined.

14. Method according to claim 13, applied to the making of a device wherein the third seat (19) is caused to bear during operation resiliently against the segment (14) to be machined, characterized in that in order to wedge the third seat (19), the resilient restoring force is counteracted so that the wedging force corresponds to the desired resilient bearing force to be exerted by the third seat on the external rolling surface.

15. Device according to claim 9, characterized in that the third seat (19) and one (21a) of the claws are carried by a lever (34) articulated relative to the two positioning seats (17) round a pin (35) close to the other claw (21b).

16. Device according to claim 10, characterized in that it includes a body (67) to which the two positioning seats (17) are joined;
– a first movable element (72, 76, 83) to which the two claws (21) are joined;
– a second movable element (79) to which the third seat (19) is joined;
– the first and second element capable of sliding relative to the body (67) parallel to a median axis (XX') of the segment (14).

17. Device according to claim 16, characterized in that the body (67), the first element (72, 74, 83) and the second element (79) are disposed inside one another coaxially with the median axis (XX') of the segment (14) and are associated with working chambers for pressurized fluid (85) for displacing the elements towards their position for bearing against the segment (14) against restoring springs (88, 89).

18. Device according to one of claims 16 or 17, characterized in that the body (67) and the two elements (72, 76, 83; 79) are fixed for rotation round the median axis (XX') of the segment (14) and provided with means (69, 70) for driving them in rotation round the said axis (XX').

19. Device according to claim 10, characterized in that one (21a) of the claws is joined to the two positioning seats (17) and the other (21b) is movable relative to them, and in that a resilient stirrup (96) bears on the third seat (19) and on the movable claw (21b) for simultaneously urging the third seat (19) against the external rolling surface (18) and urging the movable claw (21b) against the associated segment end.

20. Device according to one of claims 9 or 10, characterized in that at least some of the seats (17, 19) have two bearing surfaces (28) being interspaced by a distance parallel to the axis (UU') of the external rolling surface (18).

21. Device according to one of claims 9 or 10, characterized in that one of the claws (21a) is immobilized relative to the positioning seats (17) with regard to the displacements along the circumferential direction of the segment (14), and the other (21b) is movable along this direction relative to the positioning seats (17) so as to apply the segment against the immobilized claw (21a) and thus to position the segment (14) circumferentially relative to the positioning seats (17).

22. Device according to claim 21, characterized in that the immobilized claw (21a) is detachable.

23. Device according to one of claims 9 or 10, characterized in that the two claws (21) are joined to each other and are movable together, relative to the positioning seats (17) along a direction parallel to a median axis (XX') of the segment (14) so as to position the segment circumferentially relative to the seats (17) when bearing against the ends (22) of the segment.

FIG.1

FIG.2

FIG.3

FIG.5

FIG.4

FIG.6

FIG.7

FIG_4A

FIG. 8

FIG. 9

FIG. 10

EP 0 369 849 B1

FIG.11

FIG.13

FIG.12

FIG.14

FIG.15

FIG.16

FIG_18

FIG_17

23

FIG. 20

FIG.19